# EUROPÄISCHE PATENTSCHRIFT

(11) **EP 1 239 171 B1**
(45) Veröffentlichungstag und Bekanntmachung des Hinweises auf die Patenterteilung: **13.04.2005**
(21) Anmeldenummer: 02090072.6
(22) Anmeldetag: 25.02.2002
(51) Int. Cl.: F16C 19/30, F16C 19/54

(54) **Grossdrehlagerung**
Large rotating ball bearing
Palier rotatif de grand diamètre

(30) Priorität: 08.03.2001 DE 10112293
(43) Veröffentlichungstag der Anmeldung: 11.09.2002
(73) Patentinhaber: Terex-Demag GmbH & Co. KG, 66482 Zweibrücken (DE)
(72) Erfinder: Appel, Jürgen, Dipl.-Ing., 66497 Contwig (DE)
(74) Vertreter: Meissner, Peter E., Dipl.-Ing.

(56) Entgegenhaltungen:
- DE-A- 3 725 027
- FR-A- 2 749 357
- FR-A- 2 749 358
- US-A- 3 738 718
- US-A- 5 005 992

## Beschreibung

Die Erfindung betrifft eine Großdrehlagerung mit Wälzkörpern gemäß dem Gattungsbegriff des Patentanspruchs 1.

Großdrehlager der gattungsgemäßen Art sind seit vielen Jahren bekannt und als Standardbauteile beziehbar. Sie dienen zur Verbindung von großen Baugruppen, die gegeneinander verdrehbar sein sollen. Typische Anwendungen sind in der Verbindung von Ober- und Unterwagen von Mobilkranen, Baggern, Turmdrehkranen oder Ladekranen zu sehen. Auch an Betonmischfahrzeugen oder ähnlichen Großgeräten werden solche Lagerungen benötigt, die hohe Axiallasten und Lastmomente quer zur Lagerachse aufnehmen können.

Aus der Firmenbroschüre "Rothe Erde Large-Diameter Antifriction Bearings (Hoesch Rothe Erde GmbH, 8.97/2.0, Seite 161)" ist ein für derartige Anwendungen geeignetes Standard-Großdrehlager bekannt.

Dieses Großdrehlager weist ein erstes und ein zweites Lagerteil auf, die jeweils mit kreisförmig umlaufenden Lagerflächen für zwei Reihen von zylindrischen Wälzkörpern mit horizontaler Rotationsachse versehen sind, wobei sich die Laufflächen an den beiden Lagerteilen jeweils zu Laufflächenpaaren ergänzen. An dem ersten Lagerteil befinden sich die beiden Laufflächen für die beiden Reihen von Wälzkörpern jeweils an der Oberseite bzw. an der Unterseite eines Tragrings, der aus der Kontur des ringförmig ausgebildeten Grundkörpers des ersten Lagerteils vorspringt. Auf der gegenüberliegenden Seite des Querschnitts dieses Grundkörpers weist das erste Lagerteil eine umlaufende Verzahnung auf, die für den Drehantrieb dieses ersten Lagerteils vorgesehen ist. Dieses Standardlager ist in zwei Versionen erhältlich, nämlich mit Innenverzahnung oder mit Außenverzahnung, so dass der Tragring entweder radial außen oder radial innen am Grundkörper des ersten Lagerteils angeordnet ist. Das zweite Lagerteil ist horizontal, d.h. quer zur Lagerachse geteilt ausgeführt und besteht aus einem ringförmigen Oberteil und einem ringförmigen Unterteil. Zur Ausbildung von Laufflächen für die Wälzkörper sind Ober- und Unterteil jeweils mit ringförmig umlaufenden Ausnehmungen versehen, die im zusammengesetzten Zustand von Ober- und Unterteil des zweiten Lagerteils den Tragring des ersten Lagerteils mit vertikalem Abstand umgreifen. Der vertikale Abstand entspricht jeweils dem Durchmesser der Wälzkörper, die jeweils zwischen den Laufflächen eines Laufflächenpaars angeordnet sind. Über diese Wälzkörper können Kräfte, die in Richtung der vertikalen Lagerachse (nach oben oder unten) wirken, sicher übertragen werden. Zur Aufnahme radialer Kräfte, deren Größe wesentlich geringer ist als die der zu erwartenden vertikalen Kräfte, ist eine dritte Reihe von Wälzkörpern vorgesehen, die eine vertikale Rotationsachse aufweisen und als radiale Führungsrollen zu bezeichnen sind. Diese Führungsrollen stützen sich auf zylindermantelförmigen Lagerflächen ab, die jeweils stirnseitig im Bereich des umlaufenden Tragrings bzw. am Oberteil des zweiten Lagerteils eingearbeitet sind. Um die beiden Lagerteile mit den Baugruppen des jeweiligen Großgeräts, die gegeneinander verdrehbar gelagert sein sollen, verbinden zu können, sind eine Vielzahl von Durchgangsbohrungen parallel zur Lagerachse an den beiden Lagerteilen vorgesehen. Diese Durchgangsbohrungen sind zur Aufnahme von Schrauben bestimmt, mit denen die Lagerteile jeweils fest beispielsweise mit dem Oberwagen bzw. mit dem Unterwagen eines Mobilkrans verbunden werden. Durch die Schrauben am zweiten Lagerteil werden das Ober- und Unterteil sicher zusammengehalten. Die zweiteilige Ausführung des zweiten Lagerteils ist notwendig, um die Wälzkörper in den Zwischenraum des jeweils zugehörigen Laufflächenpaars einbringen zu können.

Aus der US 5 664 692 ist ein Mobilkran bekannt, bei dem der Oberwagen mit dem Unterwagen durch ein solches Lager verbunden ist. Zusätzlich ist dort allerdings auch das erste Lagerteil horizontal geteilt ausgeführt, wobei beide Teile im Sinne einer Schnellkupplung über eine bajonettverschlussartige Verbindung miteinander koppelbar sind.

Die beiden Teilungskreise für die Anordnung der Schrauben zur Befestigung der beiden Lagerteile weisen einen deutlichen Durchmesserunterschied auf, damit die Schraubenköpfe bzw. die zugehörigen Muttern und die erforderlichen Dichtungen zum Schutz der Wälzkörper störungsfrei untergebracht werden können. Im Bereich zwischen den beiden Teilungskreisen sind die Wälzkörper zur Übertragung der vertikalen und auch der radialen Kräfte angeordnet. Bei der Übertragung insbesondere der von oben nach unten (also unter Einschluss des Gewichts z.B. des Oberwagens eines Mobilkrans) wirkenden Vertikalkräfte treten im Bereich des Tragrings erhebliche Biegemomente auf. Um diese sicher zu beherrschen, ist eine massive Ausführung des Drehlagers notwendig. Wegen der großen Durchmesser eines solchen Lagers führt dies zu beträchtlichen Lagergewichten, die einen entsprechenden Anteil am zulässigen Gesamtgewicht beispielsweise eines Mobilkrans in Anspruch nehmen.

Ferner ist aus der DE 37 25 027 C2 ein Großwälzlager bekannt, das aus zwei ringförmigen Lagerteilen gebildet ist, die jeweils über Schrauben, die durch Durchgangsbohrungen geführt werden können, mit gegeneinander drehbaren Baugruppen eines Großgeräts verbindbar sind. Das äußere der beiden Lagerteile ist in der Weise geteilt ausgeführt, dass es einen ringförmigen Grundkörper und einen axial darüber angeordneten weiteren Ring sowie eine in eine entsprechende umlaufende Ausnehmung im Grundkörper eingelegte Laufscheibe aus gehärtetem Stahl aufweist, die einen rechteckigen Querschnitt besitzt und radial nach innen über den ringförmigen Grundkörper vorsteht. Der weitere Ring ist außen mit einem Zahnkranz versehen. Die Flachseiten der nach innen aus dem Grundkörper vorstehenden Laufscheibe bilden jeweils eine Lauffläche für zwei Reihen zylindrischer Wälzlagerkörper, die zur Übertragung axialer Zug- und Druckkräfte vorgesehen sind. Die Laufscheibe wird zwischen dem ringförmigen Grundkörper und dem weiteren Ring mittels der zur Befestigung des Lagerteils an der jeweiligen Baugruppe des Großgeräts vorgesehenen Schrauben festgeklemmt. Das zweite Lagerteil, das innerhalb des freien Raums des ringförmigen Grundkörpers angeordnet ist, ist ebenfalls ringförmig ausgeführt und weist an seinem Umfang eine ringförmig umlaufende und im Querschnitt stufenförmig ausgebildete Ausnehmung auf, in die die Wälzkörper eingebracht werden können. Im Unterschied zum ersten Lagerteil ist das zweite Lagerteil nicht geteilt ausgeführt, da die Wälzkörper radial von außen eingesetzt werden können. Die beiden Laufflächen für die beiden Reihen von Wälzlagern am zweiten Lagerteil sind allerdings nicht einstückig mit dem ersten Lagerteil ausgebildet, sondern in Form von umlaufenden Laufdrähten aus gehärtetem Stahl gebildet, die in entsprechende Nuten in der oberen und der unteren Wand der ringförmigen Ausnehmung eingelegt sind. Zur Übertragbarkeit radialer Kräfte zwischen den beiden Lagerteilen sind zwischen der inneren zylindrischen Stirnfläche der Laufscheibe und dem Grund der ringförmigen Ausnehmung des zweiten Lagerteils weitere Wälzkörper eingesetzt, die sich bezüglich des zweiten Lagerteils ebenfalls auf einem umlaufenden Laufdraht aus gehärtetem Stahl abstützen.

Aufgabe der vorliegenden Erfindung ist es, eine Großdrehlagerung mit Wälzkörpern der gattungsgemäßen Art dahingehend zu verbessern, dass das Eigengewicht des Großdrehlagers bei gleichbleibender Tragfähigkeit deutlich vermindert wird.

Gelöst wird diese Aufgabe erfindungsgemäß durch die im kennzeichnenden Teil des Patentanspruchs 1 angegebenen Merkmale. Vorteilhafte Weiterbildungen der Erfindung ergeben sich aus den Unteransprüchen.

Die Erfindung sieht vor, die Durchgangsbohrungen durch den aus zwei Teilen bestehenden ersten Lagerteil nur durch einen dieser beiden Teile gehen zu lassen und den anderen Teil nicht mit den Durchgangsbohrungen für die Befestigungsschrauben zu versehen. Der eine Teil des ersten Lagerteils ist dabei massiv ausgeführt, während der andere Teil des ersten Lagerteils als flacher, gehärteter Ringkörper mit im wesentlichen rechteckigem Querschnitt ausgebildet ist, der den einen Teil außen umschließt. Dieser flache Ringkörper ist daher nicht geeignet zur Übertragung größerer Biegemomente, wohl aber zur Übertragung großer Druckkräfte. Er weist an seiner flachen Unterseite die Lauffläche für die eine Reihe von Wälzkörpem auf, während seine flache Oberseite im montierten Zustand der Großdrehlagerung die Auflagerfläche für die erste Baugruppe des jeweiligen Großgeräts (z.B: Oberwagen eines Mobilkrans) bildet.

Der flache Ringkörper dient also lediglich dazu, die Drucklasten aus der über ihm befindlichen Konstruktion aufzunehmen und in die obere Reihe von Wälzkörpern einzuleiten. Wegen seiner vergleichsweise leichten Ausführung ermöglicht er eine gewichtsarme Lösung.

Im Hinblick auf die zu verwendenden Wälzkörper für die axialen Lagerkräfte empfehlen sich solche mit zylindrischer oder leicht kegelstumpfförmiger Form gegenüber kugelförmigen oder tonnenförmigen Wälzkörpern. Die Laufflächen für diese Wälzkörper stehen zweckmäßig senkrecht zur Lagerachse.

Es empfiehlt sich, zumindest einen Teil der Laufflächen für die Wälzkörper durch eingelegte gehärtete ringförmige, insbesondere segmentförmig zusammengesetzte bogenförmige Leisten zu bilden. Hierdurch lässt sich der Aufwand für die Härtung der Laufflächen erheblich reduzieren.

Um die gelagerten Teile motorisch gegeneinander verdrehen zu können, ist es zweckmäßig, eines der beiden Lagerteile radial innen oder außen mit einer umlaufenden Verzahnung zu versehen, in die ein Zahnritzel oder eine Schnecke eingreifen kann.

In einer besonders bevorzugten Ausführungsform ist hervorgesehen, dass das zweite Lagerteil mit einer Verzahnung versehen und als feststehendes Lagerteil am Unterwagen eines Mobilkrans in horizontaler Ausrichtung mittels Schraubverbindungen befestigt ist.

Um die Wälzkörper und die zugehörigen Laufflächen vor einem erhöhten Verschleiß durch eindringenden Schmutz zu schützen, ist es notwendig, den Spalt zwischen dem ersten und dem zweiten Lagerteil durch eine umlaufende Dichtung abzudecken. Vorzugsweise ist vorgesehen, die Dichtung so auszubilden, dass sie den Bereich von Schraubverbindungen (Schraubenköpfe oder Muttern) zur Befestigung des zweiten Lagerteils an einer Baueinheit (z.B. an dem Unterwagen eines Mobilkrans) gehäuseartig überdeckt. Hierdurch ist es möglich, diese Schraubverbindungen sehr dicht an den ersten Lagerteil heranzurücken, da der Zwischenraum nicht mehr für die Unterbringung der Dichtung freibleiben muss. Dadurch ergibt sich eine insgesamt deutlich kompaktere Bauweise. Der damit verbundene Effekt der Gewichtsreduzierung wird dadurch noch gesteigert, dass die bei der Kraftübertragung zwischen den beiden Lagerteilen auftretenden Biegemomente infolge der näher beieinander liegenden Befestigungsstellen des ersten und des zweiten Lagerteils kleiner werden, so dass die Lagerteile auf geringere Belastungen ausgelegt werden können und somit leichter werden.

Vorzugsweise wird das Gehäuse der Dichtung als Blechgehäuse zusammengesetzt, das aus zwei Blechteilen besteht. Ein erstes Blechteil mit flacher Gestalt eines Kreisrings wird dicht mit dem ersten Lagerteil und ein zweites Blechteil mit zylindermantelförmiger Gestalt dicht mit dem zweiten Lagerteil in der Weise verbunden, dass zwischen den beiden Blechteilen nur noch ein schmaler ringförmiger Dichtspalt besteht, der von einer umlaufenden elastischen Dichtlippe überdeckt wird, die an dem einen Blechteil befestigt ist und sich dichtend an das andere Blechteil anlegt.

In einer bevorzugten Ausführungsform sieht die Erfindung vor, zwischen den umlaufenden Lagerflächen, die zur Übertragung radialer Lagerkräfte dienen, Wälzkörper als radiale Führungsrollen anzuordnen. Diese Lagerflächen sind aber nicht in der üblichen Weise in dem Bauraum, der zwischen den Laufflächenpaaren für die Übertragung der axialen Lagerkräfte liegt, untergebracht, sondern befinden sich außerhalb diese Bauraums, bei vertikaler Lagerachse vorzugsweise unterhalb des unteren Laufflächenpaares. Dadurch wird eine weitere Reduzierung des Durchmesserunterschieds der beiden Teilungskreise für die Anordnung der Befestigungsschauben und somit eine Verminderung der auftretenden Biegemomente möglich.

Ein entsprechender Effekt stellt sich ein, wenn zur Übertragung radialer Lagerkräfte statt radialer Führungsrollen, die bisher üblich sind, die Lagerflächen als Gleitlager, insbesondere in Form eingelegter Gleitlagerringe ausgebildet sind.

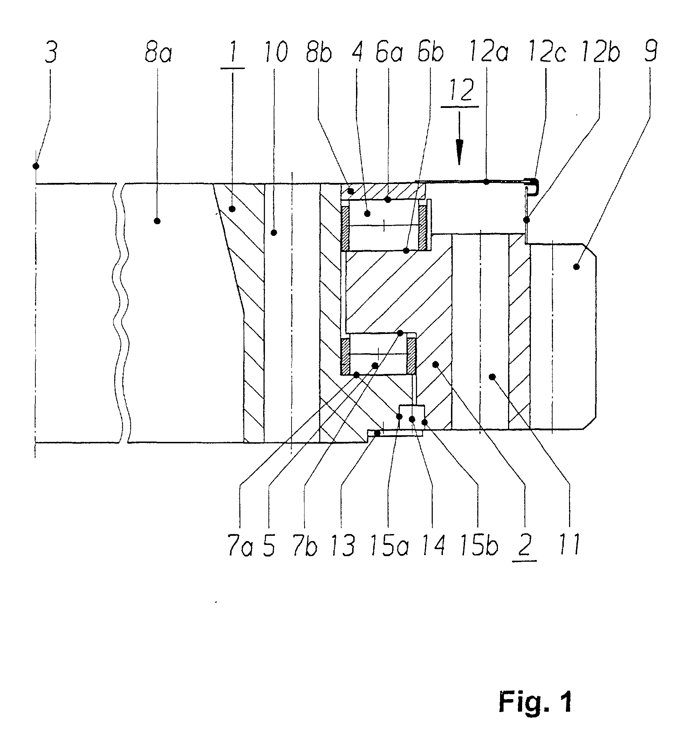

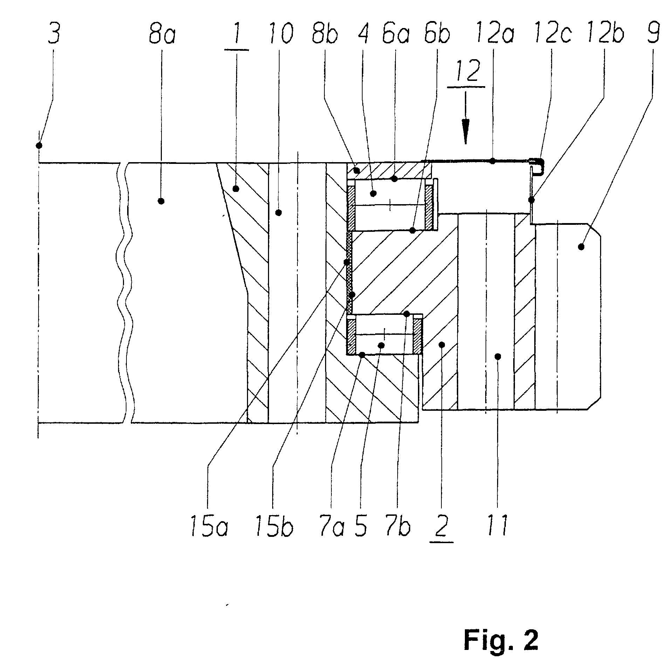

Nachfolgend wird die Erfindung anhand der in den Figuren 1 und 2 schematisch dargestellten Ausführungsbeispiele, die jeweils in Form eines axialen Längsschnitts unterschiedliche Ausführungsformen der Erfindung zeigen, näher erläutert.

Die in Figur 1 dargestellte erfindungsgemäße Großdrehlagerung weist einen ersten Lagerteil 1 und einen drehbar um die Lagerachse 3 gelagerten zweiten Lagerteil 2 auf. Der erste Lagerteil 1 ist geteilt ausgeführt und besteht aus einem massiven ersten Teil 8a und einem leichten, flachen kreisringförmigen Teil 8b, der den ersten Teil 8a im oberen Bereich außen umschließt. Parallel zur Lagerachse 3 sind verteilt über den Umfang des ersten Teils 8a des ringförmigen ersten Lagerteils 1 Durchgangsbohrungen 10 vorgesehen, durch die mittels nicht dargestellter Schrauben eine Befestigung des ersten Lagerteils 1 an einem nicht dargestellten Teil (z.B. Oberwagen eines Mobilkrans) erfolgen kann. Das zweite Lagerteil 2 weist radial außen eine umlaufende Verzahnung 9 auf, in die zum Drehantrieb ein Zahnritzel oder eine Schnecke, die nicht dargestellt sind, eingreifen kann. Auch das zweite Lagerteil 2 ist mit Durchgangsbohrungen 11 versehen, die parallel zu Lagerachse 3 verlaufen und über den Umfang des ebenfalls ringförmig ausgebildeten Lagerteils 2 verteilt sind. Durch die Durchgangsbohrungen 11 kann mittels nicht dargestellter Schrauben eine Befestigung des zweiten Lagerteils 2 z.B. am Unterwagen eines Mobilkrans erfolgen. Zur Übertragung axialer Lagerkräfte dienen die beiden Reihen von Wälzkörpern 4 und 5. Die Wälzkörper 4, 5 sind mit ihren Rotationsachsen jeweils senkrecht zur Lagerachse 3 ausgerichtet und sind daher nur zur Übertragung axialer Kräfte geeignet. Die Wälzkörper 4 laufen in einem Laufflächenpaar, von dem die Lauffläche 6a an der Unterseite des einen rechteckigen Querschnitt aufweisenden ringförmigen Teils 8b des ersten Lagerteils 1 angeordnet ist, während die Lauffläche 6b am Grund einer zylindrischen Ausnehmung im Bereich der inneren Peripherie des ringförmigen zweiten Lagerteils 2 angeordnet ist. Den mit ihrer Rotationsachse ebenfalls senkrecht zur Lagerachse 3 angestellten Wälzkörpern 5 sind die beiden Laufflächen 7a, 7b zugeordnet. Die Lauffläche 7a ist am Grund einer zylindrischen Ausnehmung im Mantelbereich des Teils 8a des ersten Lagerteils 1 angeordnet, während die Lauffläche 7b im Bereich der inneren Peripherie des zweiten Lagerteils 2 in dessen unterer Hälfte ebenfalls zylinderförmig eingearbeitet ist. Die Wälzkörper 4, 5 sind jeweils zylindrisch geformt. Radiale Lagerkräfte können über als radiale Führungsrollen dienenden Wälzkörper 14 übertragen werden, die zwischen zylindrischen Lagerflächen 15a, 15b angeordnet sind, die unterhalb der unteren Reihe der Wälzkörper 5 vorgesehen sind, also nicht zwischen den beiden Laufflächenpaaren 6a, 6b und 7a, 7b liegen. Die Wälzkörper 14 werden von einem Abdeckblech 13 gehalten.

Zur Vermeidung des Eindringens von Schmutz in den Bereich der Laufflächen 6a, 6b bzw. 7a, 7b ist eine gehäuseartige Dichtung 12 vorgesehen, die den Spalt zwischen den sich gegeneinander bewegenden beiden Lagerteilen 1, 2 abdeckt. Diese Dichtung 12 weist ein flaches, kreisförmiges erstes Blechteil 12a auf, das abgedichtet mit dem flachen zweiten Teil 8b des ersten Lagerteils 1 verbunden ist und radial zur Lagerachse 3 steht. Mit dem ersten Blechteil 12a wirkt ein zweites Blechteil 12b zusammen, das zylindermantelförmig gestaltet und dicht mit dem zweiten Lagerteil 2 verbunden ist. Das Blechteil 12 b setzt nahe am Fuß der Verzahnung 9 an und erstreckt sich koaxial zur Lagerachse 3 bis an das flache Blechteil 12a, so dass zwischen beiden nur noch ein schmaler Dichtspalt besteht. Dieser Dichtspalt wird von einer am Blechteil 12a befestigten, elastischen umlaufenden Dichtlippe 12c überdeckt, die sich an den Mantel des zweiten Blechteils 12b außen dichtend anlegt. Somit überdeckt die Dichtung 12 den gesamten Bauraum für die Unterbringung der Schraubenköpfe oder Muttern der in die Durchgangsbohrungen 11 einzuführenden Befestigungsschrauben. Zwischen den Wälzkörpern 4 und den Durchgangsbohrungen 11 ist daher kein gesonderter Freiraum für die Anbringung der Dichtung mehr erforderlich. Daher können die Teilkreise für die Durchgangsbohrungen 10, 11 deutlich dichter aneinander rücken. Dadurch wird der effektive Hebelarm bei der Übertragung von Lagerkräften parallel zur Lagerachse 3 entsprechend vermindert und die Belastung durch Biegemomente deutlich reduziert.

In Figur 2 ist eine im wesentlichen funktionsgleiche Variante der Lösung gemäß Figur 1 dargestellt. Sie unterscheidet sich lediglich dadurch, dass statt der Wälzkörper 14 zur Übertragung radialer Lagerkräfte ein entsprechendes Gleitlager vorgesehen ist. Hierzu sind die Lagerflächen 15a, b, die im Bereich zwischen den beiden Laufflächenpaaren 6a, 6b bzw. 7a, 7b angeordnet sind, als Gleitlagerflächen ausgebildet. Vorzugsweise ist dies in Form eines eingelegten Gleitlagerrings auf mindestens einer Lagerfläche 15a, b realisiert. Die Gleitlagerringe können segmentartig aus gebogenen, leistenartigen, flachen Streifen zusammengesetzt sein.

### Bezugszeichenliste:

- 1: erstes Lagerteil
- 2: zweites Lagerteil
- 3: Lagerachse
- 4: Wälzkörper
- 5: Wälzkörper
- 6a, b: Lauffläche
- 7a, b: Lauffläche
- 8a, b: Teile des ersten Lagerteils
- 9: Verzahnung
- 10: Durchgangsbohrung
- 11: Durchgangsbohrung
- 12: Dichtung
- 12a: erstes Belchteil
- 12b: zweites Blechteil
- 12c: Dichtlippe
- 13: Abdeckblech
- 14: Wälzkörper
- 15a, b: Lagerfläche

## Patentansprüche

1. Großdrehlagerung mit Wälzkörpern (4, 5) zwischen einem ersten ringförmigen Lagerteil (1) und einem relativ dazu um eine Lagerachse (3) drehbaren zweiten ringförmigen Lagerteil (2), die jeweils mit einer ersten bzw. einer zweiten Baugruppe eines Großgeräts verbunden oder verbindbar sind, insbesondere zur Verbindung von Ober- und Unterwagen von Mobilkranen, Baggern, Turmdrehkranen, Ladekranen oder für Betonmischfahrzeuge und andere Großgeräte mit hohen Axiallasten und Lastmomenten quer zur Lagerachse, wobei an beiden Lagerteilen (1, 2) jeweils kreisförmig umlaufende Laufflächen (6a, b; 7a, b), die sich jeweils zu Laufflächenpaaren ergänzen, für mindestens zwei Reihen von Wälzkörpern (4, 5) vorgesehen sind, über die parallel zur Lagerachse (3) gerichtete Druck- und Zugkräfte übertragbar sind, und an beiden Lagerteilen (1, 2) jeweils kreisförmig umlaufende Lagerflächen (15a, b) zur Übertragung radialer Kräfte vorgesehen sind, wobei ferner einer (1) der beiden Lagerteile (1, 2) in einen ersten (8a) und einen zweiten Teil (8b) geteilt ausgeführt ist und der erste (8a) und der zweite Teil (8b) jeweils eine Lauffläche (6a, 7a) der beiden Laufflächenpaare aufweist und wobei die beiden Lagerteile (1, 2) jeweils mit einer Vielzahl von über den Umfang verteilten, parallel zur Lagerachse (3) verlaufenden Durchgangsbohrungen (10, 11) für Befestigungsschrauben versehen sind,
**dadurch gekennzeichnet,**
**dass** die Durchgangsbohrungen (10) nur durch den ersten Teil (8a) des geteilten Lagerteils (1) verlaufen und der zweite Teil (8b) des geteilten Lagerteils (1) als flacher, gehärteter Ringkörper mit im wesentlichen rechteckigem Querschnitt ausgebildet ist, der den ersten Teil (8a) außen umschließt und an seiner Unterseite die Lauffläche (6a) für die Wälzkörper (4) aufweist und im montierten Zustand der Großdrehlagerung die Auflagerfläche für die erste Baugruppe des Großgeräts bildet.

2. Großdrehlagerung nach Anspruch 1,
**dadurch gekennzeichnet,**
**dass** die wälzkörper (4, 5) zylindrisch ausgebildet sind.

3. Großdrehlagerung nach einem der Ansprüche 1 - 2,
**dadurch gekennzeichnet,**
**dass** die Laufflächen (6a, b, 7a, b) senkrecht zur Lagerachse (3) verlaufen.

4. Großdrehlagerung nach einem der Ansprüche 1 - 3,
**dadurch gekennzeichnet,**
**dass** zumindest ein Teil der übringen Laufflächen (6b, 7a, 7b) für die Wälzkörper (4, 5) durch eingelegte gehärtete ringförmige, insbesondere segmentförmig gestückelte Leisten gebildet ist.

5. Großdrehlagerung nach einem der Ansprüche 1 - 4,
**dadurch gekennzeichnet,**
**dass** eines der beiden Lagerteile (1, 2) radial innen oder außen eine umlaufende Verzahnung (9) aufweist.

6. Großdrehlagerung nach einem der Ansprüche 1 - 5,
**dadurch gekennzeichnet,**
**dass** die umlaufende Lagerflächen (15a, b) für die Übertragung radialer Kräfte als Gleitlager, insbesondere in Form eingelegter Gleitlageringe, ausgebildet sind.

7. Großdrehlagerung nach einem der Ansprüche 1 - 5,
**dadurch gekennzeichnet,**
**dass** zwischen den umlaufenden Lagerflächen (15a, b) Wälzkörper (14) als radiale Führungsrollen angeordnet sind, wobei die Lagerflächen (15a, b) außerhalb des zwischen den beiden Laufflächenpaaren (6a, b und 7a, b) eingeschlossenen Bauraums, insbesondere unterhalb des unteren Laufflächenpaares (7a, b) liegen.

8. Großdrehlagerung nach Anspruch 7,
**dadurch gekennzeichnet,**
**dass** der zwischen den beiden Lagerteilen (1, 2) bestehende Spalt nach außen hin durch eine gehäuseartige Dichtung (12) abgedeckt ist, die den Bereich der Durchgangsbohrungen (11) am zweiten Lagerteil (2) in der Weise übergreift, dass die in die Durchgangsbohrungen (11) eingesetzten oder einzusetzenden Befestigungsschrauben mit ihren Köpfen oder Muttern von der Dichtung (12) eingeschlossen werden.

9. Großdrehlagerung nach Anspruch 8,
**dadurch gekennzeichnet,**
**dass** die Dichtung (12) ein kreisringfömiges, mit dem ersten Lagerteil (1) dicht verbundenes erstes Blechteil (12a) und ein zylindermantelförmiges, mit dem zweiten Lagerteil (2) dicht verbundenes zweites Blechteil (12b) aufweist, zwischen denen ein ringförmiger Dichtspalt gebildet ist.

10. Großdrehlagerung nach einem der Ansprüche 8 - 9,
**dadurch gekennzeichnet,**
**dass** der zwischen den gegeneinander drehbaren Teilen, insbesondere den beiden Blechteilen (12a, b) bestehende Dichtspalt von einer elastischen Dichtlippe überdeckt wird.

## Claims

1. Large pivot bearing with rolling bodies (4, 5) between a first annular bearing part (1) and a second annular bearing part (2) which can rotate relative to the latter about a bearing axis (3), which parts in each case are or can be connected to a first and a second sub-assembly, respectively, of a large appliance, in particular for connecting superstructures and undercarriages of mobile cranes, excavators, revolving tower cranes, loading cranes or for concrete mixing vehicles and other large appliances with high axial loads and load moments crosswise to the bearing axis, wherein raceways (6a, b; 7a, b), which in each case circulate in a circular manner and complement one another to form raceway pairs, are provided at both bearing parts (1, 2) for at least two rows of rolling bodies (4, 5), via which compressive and tensile forces, directed parallel to the bearing axis (3), can be transmitted, and bearing faces (15a, b), which in each case circulate in a circular manner, are provided at both bearing parts (1, 2) to transmit radial forces, wherein, furthermore, one (1) of the two bearing parts (1, 2) is split into a first (8a) and a second part (8b), and the first (8a) and the second part (8b) each comprise one raceway (6a, 7a) of the two raceway pairs, and wherein the two bearing parts (1, 2) are in each case provided with a plurality of through-bores (10, 11), distributed over the circumference and extending parallel to the bearing axis, for fastening screws,
**characterised in**
**that** the through-bores (10) only extend through the first part (8a) of the split bearing part (1), and the second part (8b) of the split bearing part (1) is formed as a flat, hardened annular body with a substantially rectangular cross section which externally surrounds the first part (8a), comprises at its underside the raceway (6a) for the rolling body (4) and, when the large pivot bearing is assembled, forms the support face for the first subassembly of the large appliance.

2. Large pivot bearing according to Claim 1,
**characterised in**
**that** the rolling bodies (4, 5) are cylindrical.

3. Large pivot bearing according to any one of Claims 1 - 2,
**characterised in**
**that** the raceways (6a, b, 7a, b) extend perpendicularly to the bearing axis (3).

4. Large pivot bearing according to any one of Claims 1 - 3,
**characterised in**
**that** at least some of the remaining raceways (6b, 7a, 7b) for the rolling bodies (4, 5) are formed by inserted hardened annular rails, in particular divided like segments.

5. Large pivot bearing according to any one of Claims 1 - 4,
**characterised in**
**that** one of the two bearing parts (1, 2) comprises a circulating tooth system (9) on the radial inside or outside.

6. Large pivot bearing according to any one of Claims 1 - 5,
**characterised in**
**that** the circulating bearing faces (15a, b) for transmitting radial forces are formed as sliding-contact bearings, in particular in the form of inserted sliding-contact bearing rings.

7. Large pivot bearing according to any one of Claims 1 - 5,
**characterised in**
**that**
rolling bodies (14) are disposed as radial guide rollers between the circulating bearing faces (15a, b), wherein the bearing faces (15a, b) lie outside of the construction space enclosed between the two raceway pairs (6a, b and 7a, b), in particular below the lower raceway pair (7a, b).

8. Large pivot bearing according to Claim 7,
**characterised in**
**that** the gap existing between the two bearing parts (1, 2) is covered towards the outside by a housing-like seal (12) which overlaps the region of the through-bores (11) at the second bearing part (2) such that the fastening screws which are inserted or are to be inserted in the through-bores (11) are enclosed with their heads or nuts by the seal (12).

9. Large pivot bearing according to Claim 8,
**characterised in**
**that** the seal (12) comprises a circular ring-shaped first sheet-metal part (12a), which is tightly connected to the first bearing part (1), and a second sheet-metal part (12b), in the form of a cylindrical surface, which is tightly connected to the second bearing part (2), between which sheet-metal parts an annular sealing gap is formed.

10. Large pivot bearing according to any one of Claims 8 - 9,
**characterised in**
**that** the sealing gap existing between the mutually rotatable parts, in particular the two sheet-metal parts (12a, b), is covered by an elastic sealing lip.

## Revendications

1. Palier rotatif de grand diamètre comportant des éléments de roulement (4, 5) entre une première partie de palier (1) annulaire et une seconde partie de palier (2) annulaire pouvant tourner par rapport à la première autour d'un axe de palier (3), lesquelles parties sont chacune reliées ou peuvent être chacune reliées à un premier ou à un second sous-ensemble d'un gros engin, notamment pour la liaison entre châssis mobile et train de grues mobiles, d'excavateurs, de grues-tours, de grues de chargement ou pour des véhicules à mélangeur de béton et d'autres gros engins ayant des charges axiales élevées et des moments résistants importants transversalement à l'axe de palier, des surfaces de roulement (6a, b ; 7a, b) décrivant un cercle, lesquelles se complètent pour former des paires de surfaces de roulement, étant prévues sur les deux parties de palier (1, 2) pour au moins deux rangées d'éléments de roulement (4, 5), par l'intermédiaire desquels les forces de compression et de traction orientées parallèlement à l'axe de palier (3) peuvent être transmises, et des surfaces de palier (15a, b) décrivant un cercle sur les deux parties de palier (1, 2) étant prévues pour transmettre des forces radiales, l'une (1) des deux parties de palier (1, 2) étant en outre réalisée divisée en une première partie (8a) et en une seconde partie (8b) et la première partie (8a) et la seconde partie (8b) présentant chacune une surface de roulement (6a, 7a) des deux paires de surfaces de roulement et les deux parties de palier (1, 2) étant pourvues chacune d'une pluralité de perçages traversants (10,11) pour vis de fixation s'étendant parallèlement à l'axe de palier (3) et répartis sur le pourtour,
**caractérisé en ce que** les perçages traversants (10) ne s'étendent qu'à travers la première partie (8a) de la partie de palier. (1) divisée et la seconde partie (8b) de la partie de palier (1) divisée est réalisée en tant qu'élément annulaire plat trempé ayant une section transversale essentiellement rectangulaire, lequel entoure à l'extérieur la première partie (8a) et présente sur sa face inférieure la surface de roulement (6a) pour les éléments de roulement (4) et forme, à l'état monté du palier rotatif de grand diamètre, la surface d'appui pour le premier sous-ensemble du gros engin.

2. Palier rotatif de grand diamètre selon la revendication 1, **caractérisé en ce que** les éléments de roulement (4, 5) sont cylindriques.

3. Palier rotatif de grand diamètre selon l'une des revendications 1 et 2,
**caractérisé en ce que** les surfaces de roulement (6a, b, 7a, b) s'étendent perpendiculairement à l'axe de palier (3).

4. Palier rotatif de grand diamètre selon l'une des revendications 1 à 3,
**caractérisé en ce qu'**au moins une partie des surfaces de roulement (6b, 7a, 7b) restantes pour les éléments de roulement (4, 5) est formée par des barres annulaires trempées encastrées, notamment divisées en segments.

5. Palier rotatif de grand diamètre selon l'une des revendications 1 à 4,
**caractérisé en ce que** l'une des deux parties de palier (1, 2) présente radialement à l'intérieur ou à l'extérieur une denture circulaire (9).

6. Palier rotatif de grand diamètre selon l'une des revendications 1 à 5,
**caractérisé en ce que** les surfaces de palier circulaires (15a, b) sont réalisées pour la transmission des forces radiales en tant que palier lisse, notamment sous la forme de rouleaux de palier lisse encastrés.

7. Palier rotatif de grand diamètre selon l'une des revendications 1 à 5,
**caractérisé en ce que**, entre les surfaces de palier (15a, b) circulaires, des éléments de roulement (14) sont agencés en tant que galets de guidage radiaux, les surfaces de palier (15a, b) étant situées à l'extérieur de l'espace de construction compris entre les deux paires de surfaces de roulement (6a, b et 7a, b), notamment au-dessous de la paire de surfaces de roulement (7a, b) inférieure.

8. Palier rotatif de grand diamètre selon la revendication 7,
**caractérisé en ce que** la fente située entre les deux parties de palier (1, 2) est recouverte vers l'extérieur par un joint d'étanchéité (12) de type boîtier, qui recouvre la zone des perçages traversants (1 1 ) sur la seconde partie de palier (2), de telle manière que les vis de fixation insérées ou à insérer dans les perçages traversants (11) soient englobées avec leurs têtes ou écrous par le joint d'étanchéité (12).

9. Palier rotatif de grand diamètre selon la revendication 8,
**caractérisé en ce que** le joint d'étanchéité (12) présente une première partie de tôle (12a) en forme d'anneau circulaire reliée de façon étanche à la première partie de palier (1) et une seconde partie de tôle (12b) en forme de corps de cylindre reliée de façon étanche à la seconde partie de palier (2), entre lesquelles est formée une fente d'étanchéité annulaire.

10. Palier rotatif de grand diamètre selon l'une des revendications 8 et 9,
**caractérisé en ce que** la fente d'étanchéité située entre les parties pouvant tourner l'une par rapport à l'autre, notamment les deux parties de tôle (12a, b), est recouverte par une lèvre d'étanchéité élastique.
